# EUROPEAN PATENT APPLICATION

(11) **EP 1 623 965 A1**
(43) Date of publication of application: **08.02.2006**
(21) Application number: 04017206.6
(22) Date of filing: 21.07.2004
(51) Int. Cl.: C04B 33/13, C04B 33/04, C04B 35/632, C04B 35/63, C01F 7/02, C08K 9/04, C04B 14/10

(54) **Clay mixture and preparation method thereof**

(71) Applicant: Walsin Lihwa Corporation, Taipei (TW)
(72) Inventor: Huang, Ching-Yao, Kaohsiung City (TW); Lee, Hsi-Fu, Taichung County (TW); Tseng, Tzu-Fan, Hsinchu City (TW); Wu, Jeng-Yue, Taichung City (TW)
(74) Representative: Müller-Boré & Partner Patentanwälte

(57) **Abstract**

A clay mixture (D) containing aluminum compounds is provided. The clay mixture (D) includes an aluminum compound in a range from 10% to 90% by weight of the clay mixture (D); a clay in a range from 5% to 60% by weight of the clay mixture; and a first surfactant (B1) and a second surfactant (B2), wherein an amount of the first surfactant (B1) and the second surfactant (B2) is in a range from 0.2 to 30% by weight of the clay mixture (D).

## Description

This invention relates to a clay mixture and a method for preparing the clay mixture, and more particularly to a clay mixture containing aluminum compounds and a method for preparing the clay mixture containing aluminum compounds.

Compared with traditional composite materials, high molecular nanocomposites have great characteristics such as an excellent barrier property for gas, a low moisture absorption and a nano-grade dispersion. Moreover, the nanocomposites have good mechanical strength, stiffness and thermal stability.

One of the conventional nanocomposites, nylon 6/clay, is formed by polymerization of caprolactam and the clay with surface treatment.

Recently, the nanocomposites are formed by melting or kneading, wherein a single-screw extruder or twin-screw extruder is used for melt blending polymer with the clay having surface treatment. The cost of melting or kneading is less than that of the polymerization. However, in the nanocomposites formed by melting or kneading, most clay is not well dispersed. It is very critical to have well- dispersed clay for fabricating polymer/clay nanocomposites.

In order to increase the inner layer distance of polymer/clay nanocomposites, the inorganic clay is treated and modified by a surfactant to be the organic clay. The polymer and the inorganic clay are treated by wetting and swelling, the inorganic clay is treated with a cationic surfactant or an organic compound, so that the surfactant or the organic compound can diffuse or penetrate into the inner layers of the clay to push apart the every two inner layers of the clay from each other, and thereby the clay can be well dispersed by the shearing force of the extruder.

Generally, the method for preparing the organic clay includes treating the clay with a cationic surfactant, so that the end having positive charge of the surfactant is adsorbed on the clay surface and the other end of the surfactant is away from the clay, and thereby the clay has a characteristic of hydrophobicity. The hydrophobic tails of the clay facilitate the wetting and swelling performed on the clay and the polymer. Currently, CPC and phosphorus cationic surfactants are widely used to this end; however, the expected well-dispersed clay still can not be obtained.

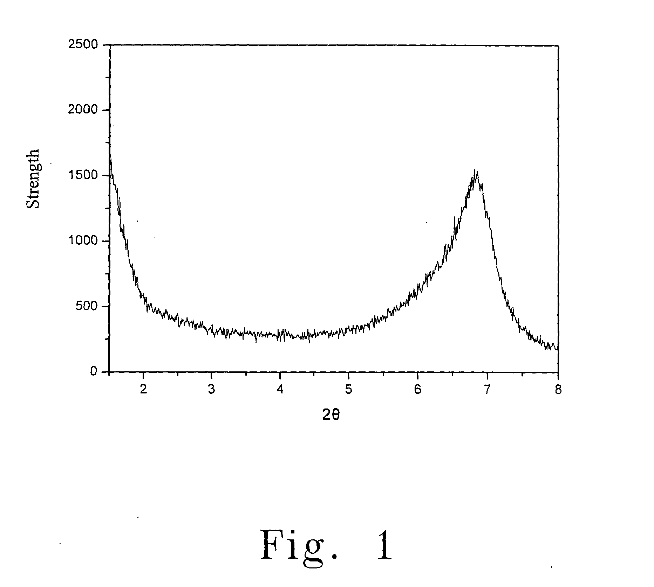

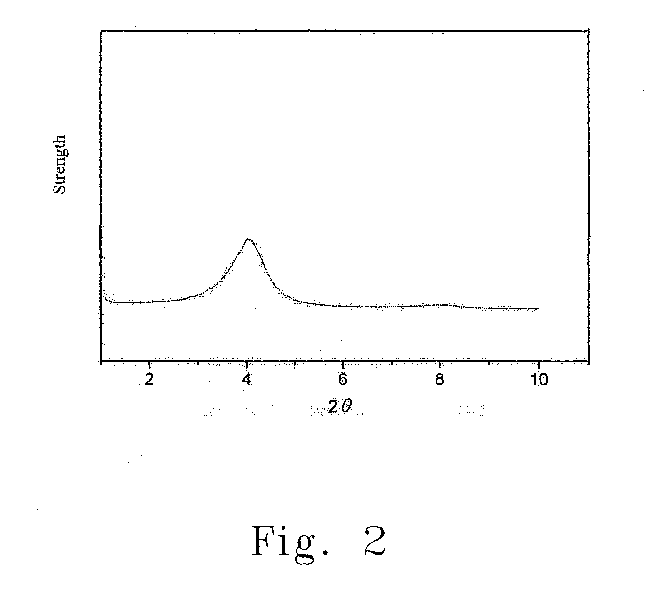

The general clay such as montmorillonite (MMT) is scanned by X ray (scanning rage: 2θ = 2-8 degrees, scanning velocity: 1 degree/minute) and the result is shown in Fig. 1. Referring to Fig. 1, an obvious peak exists at 2θ = 6-7 degrees. It means that the distance between two inner layers of montmorillonite is about 1-1.5 nanometer. Referring to Fig. 2 showing the X ray diffraction patterns of the montmorillonite (MMT) treated with CPC, the distance between two inner layers is about 2-3 nanometer and there is still an obvious peak in Fig. 2. It means that even after being treated by CPC, the inner layers of the clay still have the structural regularity, and hence the clay is not well dispersed.

In order to overcome the disadvantages of the prior art described above, the present invention provides a clay mixture and a method for preparing the clay mixture having the inner layers with destroyed structural regularity, and therefore a highly dispersed clay is provided by the present invention.

It is an aspect of the present invention to provide a clay mixture containing aluminum compounds and a clay, wherein the inner layers of the clay mixture are pushed apart and the structural regularity of the inner layers is destroyed. In accordance with the present invention, the clay mixture includes an aluminum compound in a range from about 10% to about 90% by weight of the clay mixture, a clay in a range from about 5% to 60% by weight of the clay mixture, and a first and a second surfactants, wherein an amount of the first and the second surfactants is in a range from about 0.2 to about 30% by weight of the clay mixture.

Preferably, the aluminum compound is one of an aluminum oxide and an aluminum hydroxide.

Preferably, the aluminum oxide is Al₂O₃.

Preferably, the aluminum hydroxide is one of Al(OH)₃ and AlO(OH).

Preferably, the clay is one selected from a group consisting of a montmorillonite, a bentonite, a saponite and a mica.

Preferably, the first surfactant is one of an anionic surfactant and an amphoteric surfactant.

Preferably, the first surfactant is an aminolauric acid.

Preferably, the second surfactant is a cationic surfactant.

Preferably, the cationic surfactant is one of a quaternary ammonium compound and a quaternary phosphorus compound.

Preferably, the cationic surfactant is a dodecylamine.

Preferably, the cationic surfactant is a pyridinium salt.

It is another aspect of the present invention to provide a method for preparing a clay mixture containing aluminum compounds and a clay, wherein the inner layers of the clay mixture are pushed apart and the structural regularity of the inner layers is destroyed. In accordance with the present invention, the method includes steps of forming a first solution by treating an aluminum compound solution with a first surfactant, forming a second solution by treating the first solution with a second surfactant, providing a clay solution, and adding the second solution to the clay solution to form the clay mixture.

Preferably, the first solution is in a first adsorption equilibrium between the aluminum compound and the first surfactant, and the second solution is in a second adsorption equilibrium between the first solution and the second surfactant.

Preferably, the aluminum compound is one of an aluminum oxide and an aluminum hydroxide.

Preferably, the aluminum compound is one selected from a group consisting of Al₂O₃, Al(OH)₃ and AlO(OH).

Preferably, the first surfactant is one of an anionic surfactant and an amphoteric surfactant.

Preferably, the first surfactant is an aminolauric acid.

Preferably, the second surfactant is a cationic surfactant.

Preferably, the cationic surfactant is one of a quaternary ammonium compound and a quaternary phosphorus compound.

Preferably, the cationic surfactant is a dodecylamine.

Preferably, the clay solution comprises one selected from a group consisting of a montmorillonite, a bentonite, a saponite and a mica .

It is an aspect of the present invention to provide a clay mixture containing aluminum compounds and a clay, wherein the inner layers of the clay mixture are pushed apart and the structural regularity of the inner layers is destroyed. In accordance with the present invention, the clay mixture includes an aluminum compound in a range from about 10% to about 90% by weight of the clay mixture and a clay.

The above aspects and advantages of the present invention will become more readily apparent to those ordinarily skilled in the art after reviewing the following detailed description and accompanying drawings, in which:
Fig. 1 is an x ray diffraction pattern illustrating the structural regularity of inner layers of pure clay according to the prior art;
Fig. 2 is an x ray diffraction pattern illustrating the structural regularity of inner layers of the clay treated with CPC according to the prior art;
Fig. 3 is a schematic view showing the method for preparing a clay mixture according to a preferred embodiment of the present invention;
Fig. 4 is a flow chart showing the method for preparing a clay mixture according to the preferred embodiment of the present invention;
Fig. 5 is a chart showing the aggregation efficiency of aluminum compounds and the clay according to the example 1 of the present invention;
Fig. 6 is a chart showing the aggregation efficiency of aluminum compounds and the clay according to the example 2 of the present invention;
Fig. 7 is a chart showing the aggregation efficiency of aluminum compounds and the clay according to the example 3 of the present invention;
Fig. 8 is a chart showing the aggregation efficiency of aluminum compounds and the clay according to the example 4 of the present invention;
Fig. 9 is a chart showing x ray diffraction patterns illustrating the respective structural regularity of inner layers of the clay mixtures according to the examples 1 to 4 of the present invention; and
Fig. 10 is an electron microscopic view showing the surface of the clay mixture according to the preferred embodiment of the present invention.

### EMBODIMENTS OF PROCESS AND REACTOR MODULE FOR QUICK START HYDROGEN PRODUCTION

The invention is described more specifically with reference to the following embodiments. It is to be noted that the following descriptions of preferred embodiments of this invention are presented herein for the purpose of illustration and description only; it is not intended to be exhaustive or to be limited to the precise form disclosed.

The aluminum compounds adsorbing surfactants are provided by the present invention for being mixed with the clay solution, and then the aggregation is precipitated, filtered and dried, so that the dry powder of the clay mixture is obtained. The clay mixture is well dispersed and can be prepared with the high molecular polymer to form great nanocomposites.

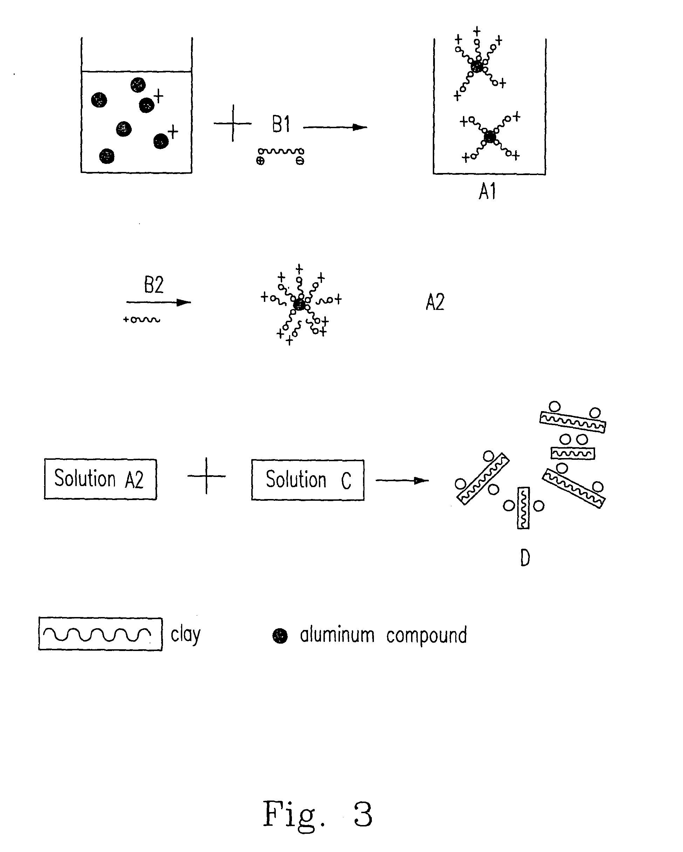

Please refer to Fig. 3. Preferably, the aluminum compound solution A provided by the present invention is a solution of an aluminum oxide or an aluminum hydroxide. Since the aluminum compound has positive charges on the surface thereof, anions or a first surfactant B1 having an anionic tail can be adsorbed by the aluminum compound to form the solution A1 when a first adsorption equilibrium between the aluminum compound and the first surfactant is reached. A second surfactant B2 having a cationic tail is added into the solution A1 to form a solution A2 when a second adsorption equilibrium between the solution A1 and the second surfactant B2 is reached. Consequently, the first surfactant B1 and the second surfactant B2 are in turn adsorbed on the aluminum compound to form a complex having more positive charges. Then, the solution A2 is mixed with a clay solution C. Since the clay has negative charges on the surface thereof, the aluminum compound complex and the clay are aggregated to form the precipitation due to the adsorption and the attraction between positive charges and negative charges. The precipitation is the clay mixture D containing aluminum compounds and the clay. In the clay mixture D, since the inner layers of the clay are inserted by the aluminum compounds, the regular distances between every two inner layers is destroyed and the inner layers of the clay are pushed apart.

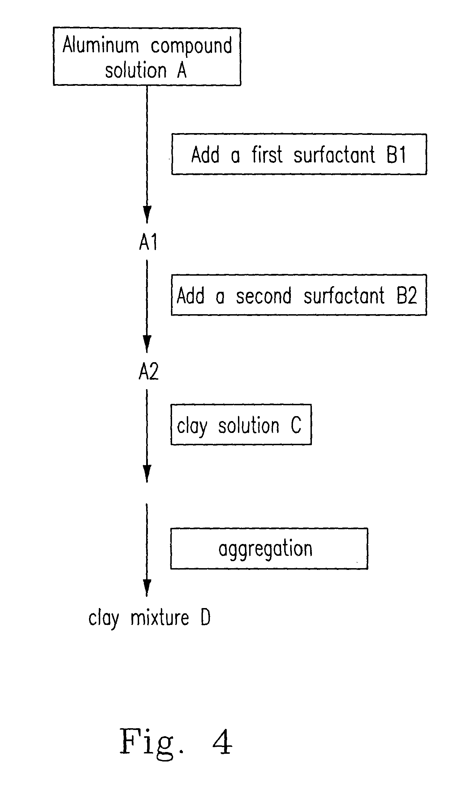

The present invention provides a method for preparing a clay mixture containing aluminum compounds. Referring to Fig. 4, the method includes (a) forming an aluminum compound solution by adding aluminum compound powders into an aqueous solution or using an aluminum compound solution with a high concentration; (b) adjusting the pH value of the aluminum compound solution to 4~5; (c) adding a first surfactant B1 such as 12-aminolauric acid into the aluminum compound solution for being adsorbed on the surfaces of the aluminum compounds, and agitating the solution for 8-12 hours to obtain a solution A1 when an adsorption equilibrium is reached; (d) adding a second surfactant B2 such as dodecylamine into the solution A1 for being adsorbed on the surfaces of the surfactant B1 to form a solution A2; (e) mixing the solution A2 with the clay solution C, wherein the clay can be montmorillonite (MMT), bentonite, saponite or mica, rapidly agitating the mixed solution, and thereby the aggregations being precipitated; and (f) filtering and drying the aggregations to form a clay mixture D containing clay in a range from about 5% to 60% by weight of the clay mixture D.

Preferably, the aluminum compound provided in the method of the present invention is an aluminum oxide or an aluminum hydroxide. More preferably, the aluminum compound is one of Al₂O₃, Al(OH)₃ and AlO(OH). Preferably, the first surfactant is one of an anionic surfactant and an amphoteric surfactant. More preferably, the first surfactant is an aminolauric acid.

Preferably, the second surfactant is a cationic surfactant. More preferably, the second surfactant is one of a quaternary ammonium compound and a quaternary phosphorus compound. More preferably, the second surfactant is a dodecylamine.

Please refer to Examples 1-3 and Tables 1-3 illustrating the aluminum compound treated with one surfactant and further mixed with the clay solution to form the clay mixture.

### Example 1

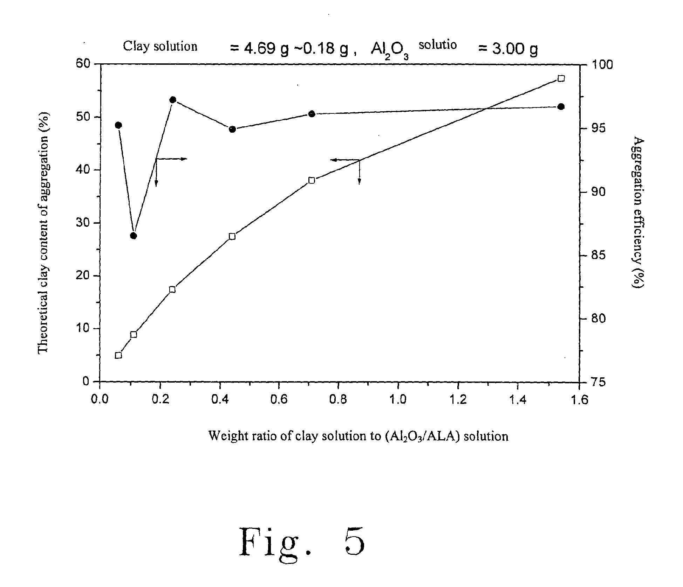

After aminolauric acid is adsorbed on Al₂O₃ to form a complex and the positive charges of the amino groups are exposed on the surface of the complex, the montmorillonite having negative charges on the surface thereof is mixed with the complex to form an aggregation, i. e. the clay mixture. The aggregation efficiency varies with the weight percentages of montmorillonite and Al₂O₃ as shown in Fig. 5. Each 3 grams of Al₂O₃ adsorbing aminolauric acid is respectively added into 0.18-4.69 grams of montmorillonite solution to form the aggregation and the resulting data are shown in Table 1 and Fig. 5.

**Table 1**

| **No.** | **1-1** | **1-2** | **1-3** | **1-4** | **1-5** | **1-6** |
|---|---|---|---|---|---|---|
| Al₂O₃/ALA solution (g) | 3.0425 | 3.0219 | 3.0309 | 3.1900 | 3.0177 | 3.0152 |
| Appearance of Al₂O₃ solution | Well , dispersed | Well dispersed | Well dispersed | Well dispersed | Well dispersed | Well dispersed |
| Clay solution (g) Solid content 0.975wt% | 4.6976 | 2.1364 | 1.3201 | 0.7730 | 0.3401 | 0.1834 |
| Dried Clay mixture (g) | 0.0772 | 0.0525 | 0.0443 | 0.0420 | 0.0321 | 0.0338 |
| Color of dried clay mixture | Slight yellow | Slight yellow | white white | white white | Milky white | Milky white Nfilky white |
| Aggregation efficiency (%) | 96.7 | 96.1 | 94.9 | 97.2 | 86.5 | 95.2 |
| Clay content of clay mixture (%) | 57.4 | 38.1 | 27.5 | 17.4 | 8.9 | 5.0 |

The aggregation efficiency is over 90% except No.1-5, and the clay content of the clay mixture is in a range from 5% to 57.4%. Please refer to Fig. 5 showing the data of Table 1. The aggregation efficiency is close to 96-97% when the ratio of the clay to Al₂O₃ increases.

### Example 2

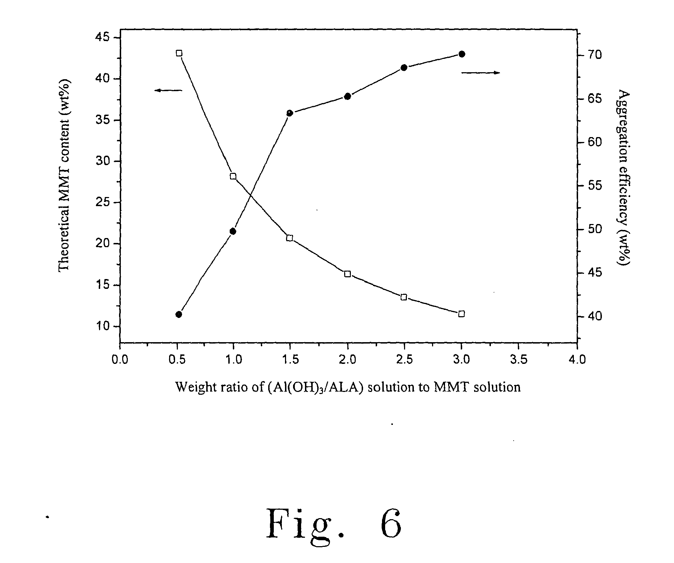

After adsorbing aminolauric acid (ALA), Al(OH)₃ complex is mixed with the clay solution to form the clay mixture and the resulting data are shown in Table 2 and Fig. 6. The clay content of the clay mixture is in a range from 12% to 46%.

**Table 2**

| **No.** | **2-1** | **2-2** | **2-3** | **2-4** | **2-5** | **2-6** |
|---|---|---|---|---|---|---|
| Al(OH)₃/ALA solution(g) | 2.0648 | 3.9985 | 6.0256 | 8.0472 | 10.0081 | 12.0118 |
| Appearance of Al(OH)₃ solution | Well dispersed | Well dispersed | Well dispersed | Well dispersed | Well dispersed | Well dispersed |
| Clay solution (g) Solid content 0.975wt% | 4.0102 | 4.0196 | 4.0308 | 4.0286 | 4.0141 | 4.0018 |
| Dried clay mixture (g) | 0.0365 | 0.0693 | 0.1204 | 0.1571 | 0.1984 | 0.2340 |
| Color of clay mixture | Slight yellow | Milky white | Milky white | Milky white | Milky white | Milky white |
| Aggregation efficiency (%) | 40.24 | 49.78 | 63.40 | 65.32 | 68.58 | 70.14 |
| Clay content of clay mixture (%) | 45.45 | 29.47 | 21.94 | 17.37 | 14.33 | 12.27 |

### Example 3

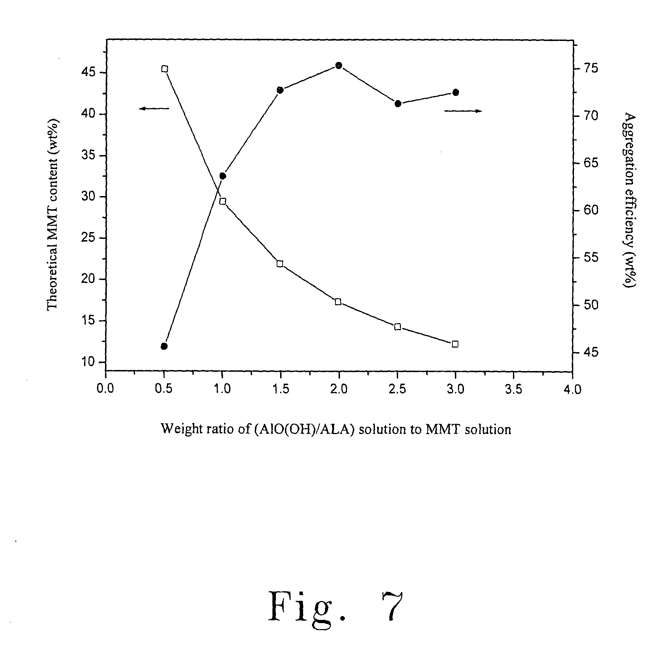

The aluminum hydroxide, AlO(OH), adsorbing aminolauric acid (ALA) is aggregated with the clay and the resulting data are shown in Table 3 and Fig. 7. The aggregation efficiency is in a range from 46% to 72%, and the clay content of the clay mixture is in a range from 12% to 45%.

**Table 3**

| **No.** | **3-1** | **3-2** | **3-3** | **3-4** | **3-5** | **3-6** |
|---|---|---|---|---|---|---|
| AlO(OH)/ALA solution(g) | 2.0090 | 4.0259 | 6.0013 | 8.0232 | 10.0054 | 12.0314 |
| Appearance of AlO(OH) solution | Well dispersed | Well dispersed | Well dispersed | Well dispersed | Well dispersed | Well dispersed |
| Clay solution (g) Solid content 0.975wt% | 4.0031 | 4.0215 | 4.0312 | 4.0353 | 4.0030 | 4.0173 |
| Dried clay mixture (g) | 0.0391 | 0.0846 | 0.1302 | 0.1704 | 0.194 | 0.2315 |
| Color of clay mixture | Slight yellow | Milky white | Milky white | Milky white | Milky white | Milky white |
| Aggregation efficiency (%) | 45.57. | 63.61 | 72.70 | 75.30 | 71.27 | 72.46 |
| Clay content of clay mixture (%) | 43.74 | 28.04 | 28.10 | 20.78 | 16.29 | 11.22 |

### Example 4

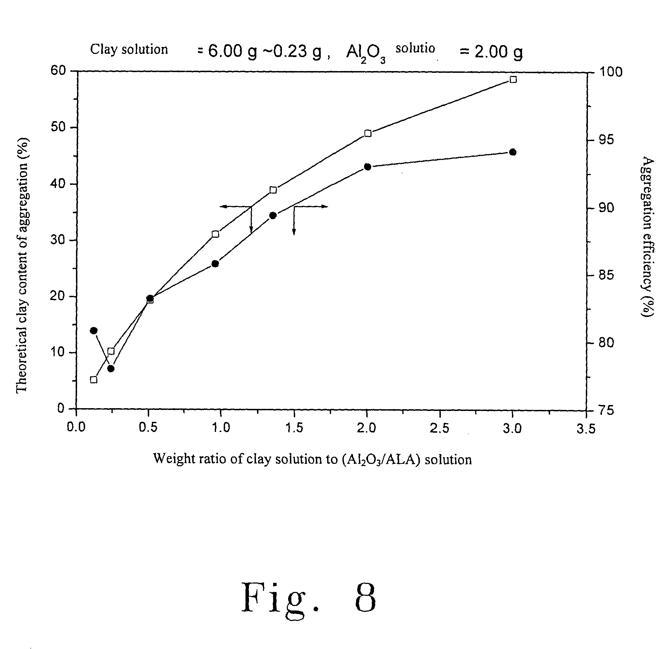

Example 4 is the preferred embodiment of the present invention. The aluminum compound, Al₂O₃, is in turn treated with aminolauric acid (ALA) and dodecylamine (DA) to form the aluminum complex, and then the aluminum complex is mixed with the clay solution to form the clay mixture. The resulting data are shown in Table 4 and Fig. 8. In contrast to Examples 1-3, the aggregation efficiency reaches 94.1% (No. 4-1) and the clay content of the clay mixture is 58.7%. Referring to No. 4-7 in Table 4, the aggregation efficiency is 80.8% and the clay content of the clay mixture is 5.2%. In accordance with the preferred embodiment of the present invention, the clay content of the clay mixture is in a range from 5% to 60%.

**Table 4**

| **No.** | **4-1** | **4-2** | **4-3** | **4-4** | **4-5** | **4-6** | **4-7** |
|---|---|---|---|---|---|---|---|
| Al₂O₃ solution (g) | 2.0079 | 2.0040 | 2.0027 | 2.0112 | 2.0285 | 2.0147 | 2.0183 |
| Appearance of Al₂O₃ solution | Well dispersed | Well dispersed | Well dispersed | Well dispersed | Well dispersed | Well dispersed | Well dispersed |
| Clay solution (g) | 5.9950 | 4.0646 | 2.6939 | 1.9107 | 1.0275 | 0.4836 | 0.2316 |
| Dried Clay mixture (g) | 0.0841 | 0.0674 | 0.0540 | 0.0461 | 0.0385 | 0.0322 | 0.0316 |
| Color of clay mixture | gray | gray | gray | white | white | white | white |
| Aggregation efficiency (%) | 94.1 | 93.0 | 89.4 | 85.8 | 83.2 | 78.0 | 80.8 |
| Clay content of clay mixture (%) | 58.7 | 49.1 | 39.1 | 31.2 | 19.4 | 10.3 | 5.2 |

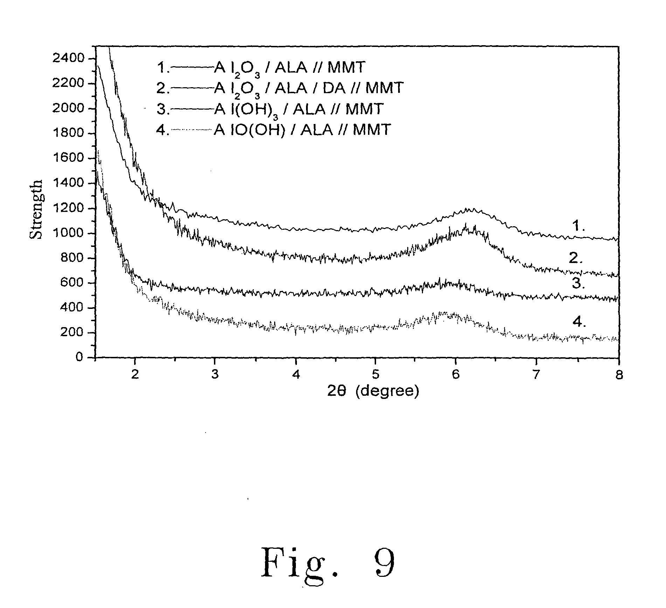

Please refer to Fig. 9 showing x ray diffraction patterns, which illustrates the respective structural regularity of inner layers of the clay mixtures according to the examples 1 to 4 of the present invention. In contrast to Fig. 1, the diffraction patterns shown in Fig. 9 are flat and no peaks exist at 2θ = 6-7 degrees. In accordance with Fig. 9, the structural regularity of inner layers of the montmorillonite (MMT) is destroyed. It is to be noted that the structural regularity of the montmorillonite (MMT) of the clay mixture provided by the present invention is destroyed.

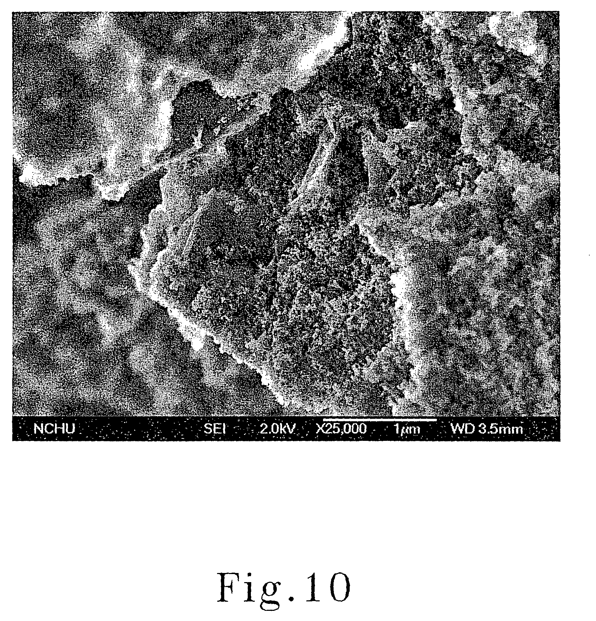

Fig. 10 is an electron microscopic view by use of a field-emission scanning electron microscope. The surface of the clay mixture (ALO/ALA/DA//MMT) according to the preferred embodiment of the present invention is shown in Fig. 10. It is clearly shown that the nanoparticles of Al₂O₃ with a diameter of 20-30 nm are adsorbed on the surface of the montmorillonite, some parts of the clay are overlapped, and furthermore the nanoparticles of Al₂O₃ are adsorbed in the inner layers of the montmorillonite.

In accordance with Figs. 9 and 10, the structural regularity of the clay contained in the clay mixture of the present invention is destroyed, so that the distance between every two inner layers of the clay is significantly increased. Therefore, the clay mixture with a great clay dispersion of the present invention can be provided as a good material of nanocomposites.

## Claims

1. A clay mixture (D), comprising:
an aluminum compound in a range from about 10% to about 90% by weight of said clay mixture;
a clay in a range from about 5% to 60% by weight of said clay mixture; and
a first surfactant (B1) and a second surfactant (B2),
wherein an amount of said first and said second surfactants is in a range from about 0.2 to about 30% by weight of said clay mixture.

2. The clay mixture (D) according claim 1, wherein said aluminum compound is one of an aluminum oxide and an aluminum hydroxide.

3. The clay mixture according to claim 2; wherein said aluminum oxide is Al₂O₃.

4. The clay mixture according to claim 2, wherein said aluminum hydroxide is one of Al(OH)₃ and AlO(OH).

5. The clay mixture according to anyone of claims 1 to 4, wherein said clay is one selected from a group consisting of a montmorillonite, a bentonite, a saponite and a mica.

6. The clay mixture according to anyone of claims 1 to 5, wherein said first surfactant (B1) is one of an anionic surfactant and an amphoteric surfactant.

7. The clay mixture according to claim 6, wherein said first surfactant (B1) is an aminolauric acid.

8. The clay mixture according to anyone of claims 1 to 7, wherein said second surfactant (B2) is a cationic surfactant.

9. The clay mixture according to claim 8, wherein said cationic surfactant is one of a quaternary ammonium compound and a quaternary phosphorus compound.

10. The clay mixture according to claim 8, wherein said cationic surfactant is a dodecylamine.

11. The clay mixture according to claim 8, wherein said cationic surfactant is a pyridinium salt.

12. A method for preparing a clay mixture (D), comprising the steps of :
forming a first solution (A1) by treating an aluminum compound solution with a first surfactant (B1);
forming a second solution (A2) by treating said first solution (A1) with a second surfactant (B2);
providing a clay solution (C); and
adding said second solution (A2) to said clay solution (C) to form said clay mixture (D).

13. The method according to claim 12, wherein said first solution (A1) is in a first adsorption equilibrium between said aluminum compound and said first surfactant (B1), and said second solution (A2) is in a second adsorption equilibrium between said first solution (A1) and said second surfactant (B2).

14. The method according to claim 12, wherein said aluminum compound is one of an aluminum oxide and an aluminum hydroxide.

15. The method according to claim 12, wherein said aluminum compound is one selected from a group consisting of Al₂O₃, Al(OH)₃ and AlO(OH).

16. The method according to anyone of claims 12 to 15, wherein said first surfactant (B1) is one of an anionic surfactant and an amphoteric surfactant.

17. The method according to claim 16, wherein said first surfactant (B1) is an aminolauric acid.

18. The method according to anyone of claims 12 to 17, wherein said second surfactant (B2) is a cationic surfactant.

19. The method according to claim 18, wherein said cationic surfactant is one of a quaternary ammonium compound and a quaternary phosphorus compound.

20. The method according to claim 19, wherein said cationic surfactant is a dodecylamine.

21. The method according to anyone of claims 12 to 20; wherein said clay solution (C) comprises one selected from a group consisting of a montmorillonite, a bentonite, a saponite and a mica.

22. A clay mixture (D), comprising:
an aluminum compound in a range from about 10% to about 90% by weight of said clay mixture; and
a clay.
